# EUROPEAN PATENT APPLICATION

(11) **EP 2 477 398 A1**
(43) Date of publication of application: **18.07.2012**
(21) Application number: 11150802.4
(22) Date of filing: 13.01.2011
(51) Int. Cl.: H04N 7/173

(54) **Method and system for managing media objects in mobile communication devices**

(71) Applicant: Research In Motion Limited, Waterloo, ON N2L 3W8 (CA)
(72) Inventor: Vuong, Thanh Vinh, Waterloo Ontario N2L 3L3 (CA)
(74) Representative: Moore, Barry

(57) **Abstract**

A method of managing, or organizing, media objects generated by a plurality of portable electronic devices by defining a project and associating media objects created or stored on the plurality of devices to the project. As media objects are created, the object's metadata can be examined to determine if the media objects satisfy the project criteria, and a project tag can be associated with the media object. A media project can be created for a single type of media object, e.g. photographs, or can encompass multiple media object types, such as digital photographs, video clips, and multimedia objects, in a single media project.

## Description

The present disclosure relates generally to mobile communication devices. More particularly, the present disclosure relates to management of multimedia objects associated with mobile communication devices.

Mobile, or portable electronic, communication devices are widely used for performing tasks such as sending and receiving e-mails, placing and receiving phone calls, editing and storing contact information, and scheduling tasks. Mobile communication devices are now commonly integrated with video and still cameras, voice recorders, Internet browsers, etc., which add still further communication capabilities such as video calling, picture tagging, personalized greeting, etc.

Such multi-use, multi-function, mobile devices with integrated cameras, often referred to as smart phones, have had a tremendous social impact over the last decade. The advent of such mobile devices has enabled users to easily create media objects, such as pictures, video clips, voice notes, etc. However, the sharing and management of such media objects can require advanced post-processing, which adds expense and complexity to the use of the multimedia functionality.

### GENERAL

It will be appreciated that numerous specific details are set forth in order to provide a thorough understanding of the implementations described herein. However, it will be understood by those of ordinary skill in the art that the implementations described herein may be practiced without these specific details. In other instances, well-known methods, procedures and components have not been described in detail so as not to obscure the implementations described herein. Also, the description is not to be considered as limited to the scope of the implementations described herein.

The application generally relates to an electronic device, which in the implementations described herein may be a portable electronic device. Examples of portable electronic devices comprise mobile, or handheld, wireless communication devices such as pagers, cellular phones, cellular smart-phones, wireless organizers, personal digital assistants, wirelessly enabled notebook computers and the like. The present disclosure relates generally to a method of managing media files generated by media devices, such as cameras, voice recorders, video recorders and the like, associated with a plurality of portable electronic devices. Media files, termed herein "media objects", can include, for example, digital photographs, pictures, sound recordings, video recordings and multimedia combinations thereof. The method and system described herein may create or define a media project that has associated project parameters. The media project may be shared amongst the plurality of portable electronic devices. Media objects meeting the project parameters are then identified, and associated to the media project. Implementations according to the present disclosure provide methods and systems that permit the efficient sharing and management of media objects created on portable electronic communication devices.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, the portable electronic device may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like. Such a device may include a data port to connect to a general-purpose computer or other device, such as a USB port, to download and upload digital information, such as media files.

### BRIEF DESCRIPTION OF THE DRAWINGS

Implementations of the present disclosure will now be described, by way of example only, with reference to the attached Figures.

Fig. 1 is a block diagram of an example implementation of a portable electronic device.

Fig. 2 is a front view of an example portable electronic device according to an implementation.

Fig. 3 is a rear view of an example portable electronic device according to an implementation.

Fig. 4 is a flow chart of a method for managing media objects according to an example implementation.

Figs. 5A- C are flow charts of methods for creating a media project according to example implementations.

Figs. 6A- B are flow charts of methods for sharing a media project according to example implementations.

Figs. 7A- B are flow charts of methods for identifying media objects and associating the media objects to a media project according to example implementations.

### DETAILED DESCRIPTION

It will be appreciated that for simplicity and clarity of illustration, where considered appropriate, reference numerals may be repeated among the Figures to indicate corresponding or analogous elements.

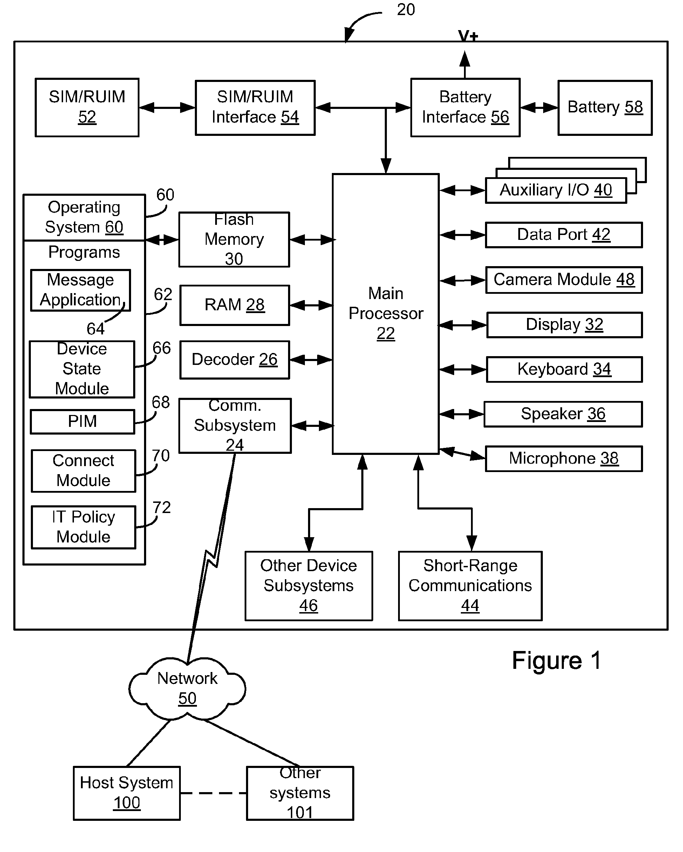

Reference is first made to Figure 1, which shows a block diagram of an example implementation of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques and encryption techniques (e.g. using an encryption technique such as Data Encryption Standard (DES), Triple DES, or Advanced Encryption Standard (AES)). The communication subsystem 24 receives messages from and sends messages to a wireless network 50. In this example implementation of the portable electronic device 20, the communication subsystem 24 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that such standards will have similarities to the network behavior described herein, and it will also be understood by persons skilled in the art that the implementations described herein are intended to use any other suitable standards that are developed in the future. The wireless link connecting the communication subsystem 24 with the wireless network 50 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 50 associated with the portable electronic device 20 is a GSM/GPRS wireless network in one example implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The processor 22 interacts with additional subsystems such as a Random Access Memory (RAM) 28, a flash memory 30, a display device 32, a keyboard 34, a speaker 36, a microphone 38, an auxiliary input/output (I/O) subsystem 40, a data port 42, short-range communications subsystem 44 and other device subsystems 46. In the present implementation, the processor 22 also interacts with the camera module 48 described below.

Some of the subsystems of the portable electronic device 20 perform communication-related functions, whereas other subsystems may provide "resident" or on-device functions. By way of example, the display device 32 and the keyboard 34 may be used for both communication-related functions, such as entering a text message for transmission over the network 50, and device-resident functions such as calculator or task list functions.

The portable electronic device 20 can send and receive communication signals over the wireless network 50 after network registration or activation procedures have been completed. Network access is associated with a subscriber or user of the portable electronic device 20. To identify a subscriber according to the present implementation, the portable electronic device 20 uses a SIM/RUIM card 52 (i.e. Subscriber Identity Module or a Removable User Identity Module) inserted into a SIM/RUIM interface 54 for communication with a network such as the network 50. The SIM/RUIM card 52 is one type of a conventional "smart card" that can be used to identify a subscriber of the portable electronic device 20 and to personalize the portable electronic device 20, among other things. In the present implementation the portable electronic device 20 is not fully operational for communication with the wireless network 50 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, the SIM/RUIM card 52 is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including calendar (or datebook) information and recent call information. Alternatively, user identification information can also be programmed into the flash memory 30.

The portable electronic device 20 is a battery-powered device and includes a battery interface 56 for receiving one or more rechargeable batteries 58. In at least some implementations, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 to 72 which are described in more detail below. The operating system 60 and the software components 64 to 72 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62 to 72, such as specific device applications, or parts thereof, may be temporarily loaded into a volatile store such as the RAM 28. Other software components can also be included, as is well known to those skilled in the art.

The subset of software applications 62 that control basic device operations, including data and voice communication applications, will normally be installed on the portable electronic device 20 during the manufacture of the portable electronic device 20. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some implementations, some of the sent and received messages may be stored remotely from the device 20 such as in a data store of an associated host system 100 with which the portable electronic device 20 communicates.

The host system 100 can be a corporate enterprise or other local area network (LAN) comprising one or more servers (not shown), but may also be a home office computer or some other private system, for example, in variant implementations. Typically, a plurality of mobile devices can communicate wirelessly with the host system 100 through one or more nodes of the wireless network 50. It is also contemplated that portable electronic device 20 can communicate with other systems 101. The other systems 101 can include, for example, servers, and associated websites, accessible over the Internet, FTP servers and sites, and "clouds" of servers in a cloud computing environment. According to particular implementations, other systems 101 may be directly accessed by the portable electronic device 20 through network 50, as indicated by the solid line linking network 50 to other systems 101, or through host system 100, as indicated by the hashed line linking host system 100 and other systems 101.

The software applications can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. A PIM application has the ability to send and receive data items via the wireless network 50. PIM data items may be seamlessly integrated, synchronized, and updated via the wireless network 50 with the portable electronic device subscriber's corresponding data items stored or associated or both stored and associated with a host computer system 100. This functionality creates a mirrored host computer on the portable electronic device 20 with respect to such items. This functionality can be particularly advantageous when the host computer system 100 is the portable electronic device subscriber's office computer system.

The portable electronic device 20 also includes a connect module 70, and an information technology (IT) policy module 72. The connect module 70 implements the communication protocols that are required for the portable electronic device 20 to communicate with the wireless infrastructure and any host system 100, such as an enterprise system, with which the portable electronic device 20 is authorized to interface.

The connect module 70 includes a set ofAPls that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system 100. A subset of applications for which access is provided by the connect module 70 can be used to pass IT policy commands from the host system 100 to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 50, the auxiliary I/O subsystem 40, the data port 42, the short-range communications subsystem 44, or any other suitable device subsystem 46. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 44 provides for communication between the portable electronic device 20 and different systems or devices, without the use of the wireless network 50. For example, the short-range communications subsystem 44 may include an infrared device and associated circuits and components for short-range communication. Examples of short-range communication standards include standards developed by the Infrared Data Association (IrDA), Bluetooth™, the 802.11 family of standards developed by IEEE, and other WiFi and Near Field Communication techniques.

Other device subsystems 46 can include, for example, a global positioning system (GPS) or other geo-location systems, as is well-known in the art. Appropriate application software can be provided as part of programs 62 at the electronic device 20 for facilitating functions, such as determining current location, determining map coordinates, and displaying maps.

In use, a received signal such as a text message, an e-mail message, or web page download is processed by the communication subsystem 24 and input to the processor 22. The processor 22 then processes the received signal for output to the display device 32 or alternatively to the auxiliary I/O subsystem 40. A subscriber may also compose data items, such as e-mail messages, for example, using the keyboard 34, which may be implemented in any known manner, such as a touchscreen, a conventional keyboard, with or without the use of auxiliary I/O subsystem 40. The auxiliary subsystem 40 may include devices such as: a mouse, track ball, infrared fingerprint detector, or a roller wheel with dynamic button pressing capability. A composed item may be transmitted over the wireless network 50 through the communication subsystem 24.

For voice communications, the overall operation of the portable electronic device 20 is substantially similar, except that the received signals are output to the speaker 36, and the microphone 38 generates signals for transmission. Alternative voice or audio I/O subsystems, such as a voice message recording subsystem, can also be implemented on the portable electronic device 20. Although voice or audio signal output is accomplished primarily through the speaker 36, the display device 32 can also be used to provide additional information such as the identity of a calling party, duration of a voice call, or other voice call related information.

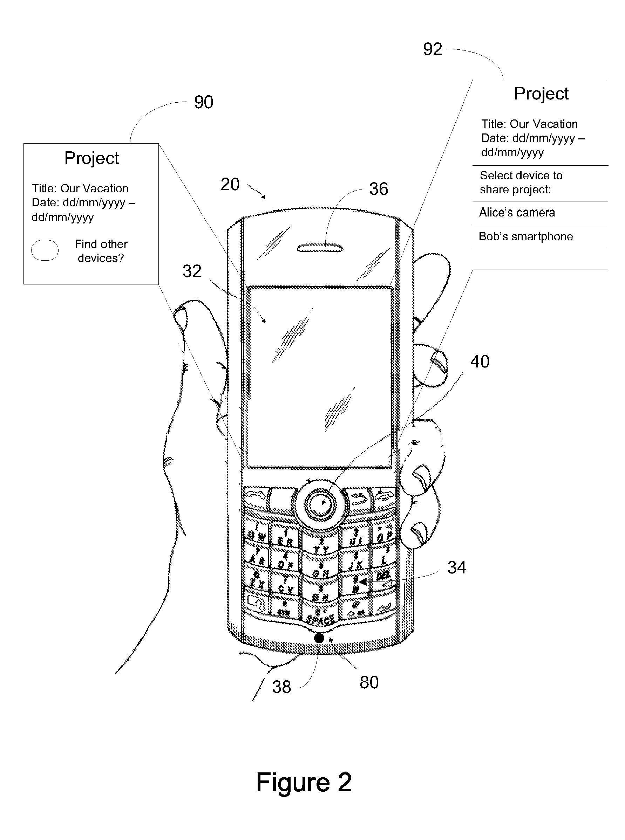

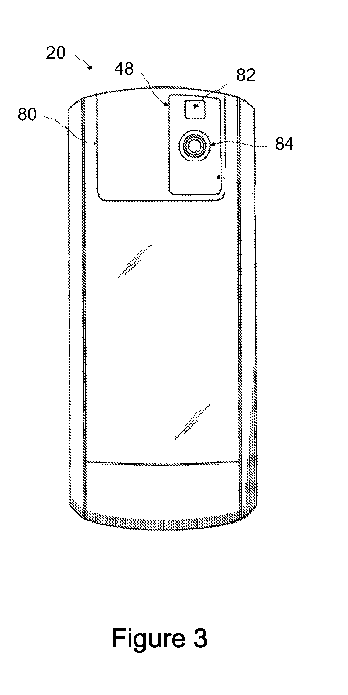

Referring now to Figures 2 and 3 there is shown a front view and a rear view, respectively, of an example portable electronic device 20 according to an implementation. The portable electronic device 20 according to the present example includes a housing 80 and the display device 32 framed by the housing 80. The portable electronic device 20 includes the speaker 36, the microphone 38, and an auxiliary I/O subsystem 40 in the form of a trackball. In the present example, the keyboard 34 includes a number of keys including alphanumeric keys and other functional keys. The housing 80 is made from a suitable material as will occur to those skilled in the art and can be stored, for example, in a holster (not shown) that includes an attachment for attaching to a user's belt.

The portable electronic device 20 also includes the camera module 48 that includes a flash output arrangement 82 and an image capturing system 84 both framed by the housing 80. The image capturing system 84 includes a number of components including an optical system of lenses, an image sensor, a controller and an image processor. It will be appreciated that associated software for controlling the camera module 48 resides on the portable electronic device 20, in the programs 62 at the flash memory 30. By pressing, for example, a key on the keyboard 34 or by selecting a corresponding on-screen menu option or icon, the camera module 48 is turned on as the camera application is launched. The camera module 48 is employed for taking still images by, for example, pressing a key on the keyboard 34 or by pressing the auxiliary I/O subsystem 40 trackball shown in Figure 2. It is contemplated that the camera module 48 can be also used for capturing video images. When a picture is taken, the image can be displayed on the display device 32 and the user can be provided with options such as the option to discard or delete the picture, save the picture to, for example, flash memory 30 and others. When the camera module 48 is in use and the associated camera application is running, other functions, such as, for example, the receipt of electronic messages, can still be performed at the portable electronic device 20.

The associated camera application can permit user interaction with the camera module 48 such as zooming in and out using the keyboard 34 or auxiliary I/O subsystem 40, changing the resolution of the captured image, or turning the flash output arrangement 82 on, off or to an automatic setting, for example. Pictures taken using the camera module 48 can be stored in any suitable format in the flash memory 30, for example, and can be retrieved for viewing, for setting as a background on the display device 32, or for sending as an attachment in a message. It will be appreciated that a picture application can also be provided as part of the programs 62 at the portable electronic device 20 for facilitating management of stored pictures.

The present disclosure can best be illustrated by example. Assume a group of people are travelling together, and each member of the group has a different portable electronic device that includes an integrated digital camera. All members of the group take pictures while on the trip, and wish to combine the group members' pictures into a single digital "album". Prior methods permit the group members to, for example, individually upload the group members' pictures to a common site. However, the lack of uniformity amongst photographic naming conventions of different manufacturers does not provide a simple, efficient and elegant way to categorize or group the photographs together.

Generally, the present disclosure provides a method of managing, or organizing, media objects, such as photographs, generated by a plurality of diverse portable electronic devices by defining a project and associating media objects created or stored on the plurality of devices to the project. A media project can be created for a single type of media object, e.g. photographs, or can encompass multiple media object types, such as digital photographs, video clips, and multimedia objects, in a single media project. The method can be implemented on, for example, portable electronic device 20, comprising a media device for generating media objects, such as camera module 48. The media objects can be stored in, for example, flash memory 30. The media project, having project parameters and a project name, or other identifier, can also be stored in flash memory 30. Media objects meeting the project parameters can then be associated with the project, under the control of processor 22 configured to identify such media objects, and associate the media objects with the project by, for example, inserting a project tag into metadata associated with each media object.

The disclosed method and system will be described by example with reference to media objects that are pictures or photographs, such as generated by camera module 48. Such description is non-limiting, and, as will be understood by those of skill in the art, the media objects can include any media object including, but not limited to, digital pictures or photographs, sound or voice recordings, video clips, and multimedia objects combining any of the above.

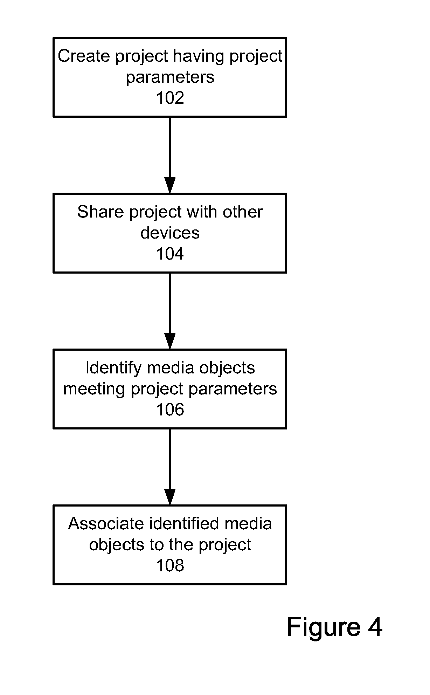

The method is generally shown in Figure 4, and first comprises creating a media project (102) having project parameters. According to an example implementation, creating the media project can comprise determining the project parameters, such as one or more of a project date, date range, project location and media object type(s), and generating a project tag for identifying the media project.

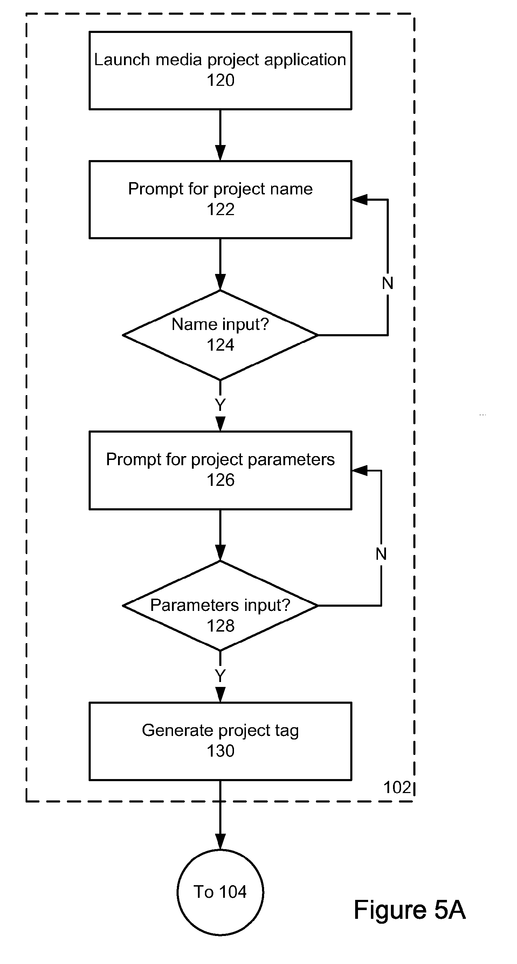

As shown in Figure 5A, to create the project, a media project application is launched (120). According to example implementations, the media project application can be launched from the device, or from another computing device, such as the user's home computer. The application can be launched either manually by selection of the user, or automatically in response to, for example, detecting actuation of the camera module 48. The media project application can, for example, be an application or program stored at programs 62 (see Figure 1), and executed on processor 22, or, according to certain implementations, can be resident on a server associated with host system 100 or other systems 101, and accessible to portable electronic device 20 through network 50 (see Figure 1).

The media project application can then prompt the user for a project name (122), or other project identifier. A default project name can be provided, such as based on current date, location or time. Alternately, the user can be prompted to enter a custom name for the media project. Once a project name has been input (124) or accepted, the user can be prompted for project parameters (126), such as one or more of a date, date range, location (e.g. city, GPS coordinates, etc.), and media type(s) to be included in the project. The project parameters can, for example, be input, or directly entered, in response to prompts on the portable electronic device or on another device, such as the user's home computer. As used herein, a "prompt" is any cue or stimulus to input or accept data. For example, referring to Figure 1, prompts can be visual cues displayed on display device 32 as data fields, radio buttons, etc. These fields or buttons can be filled or accepted by actuation of keyboard 34, auxiliary I/O subsystem 40, or both keyboard 34 and auxiliary I/O subsystem 40. In devices having voice recognition capabilities, prompts can be given by audible cues, and entries created or accepted by voice actuation.

Depending on other factors, such as design preferences, the nature of a particular project and the media type(s) involved, other project parameters can be defined. Non-limiting examples of such additional project parameters can include parameters providing a detailed project description, and parameters defining sub-projects (e.g., a subset of a project having further defining parameters, such as a limited date range or location, or related or a particular media type), due dates, deadlines, and project stakeholders/participants. Again, default values, based on, for example, current date, location or time, can be provided. The creation of a media project is further illustrated in Figure 2. When the media project application is launched, a screen, such as screen 90, can be displayed to the user of the device 20. The project name can be, for example, input or entered in the field "Title", and the project parameters, such as the illustrated date range, can be entered in the field " Date".

Once the project parameters have been input (128), the media project application generates a project tag, or label, such as for insertion into metadata associated with media objects eventually associated to the project. As used herein, "metadata" is defined as data about data, such as is commonly used to describe or define digital documents and data. The format and content of the project tag can depend on the metadata commonly associated with a particular media type, the project parameters, and other design preferences. For example, digital photographs are commonly provided with Exchangeable image file format (Exif) metadata tags, as developed by the Japan Electronic Industries Development Association (JEIDA), to specify date and time stamps and camera setting used to take the picture, to provide a thumbnail for previewing, and to provide copyright information. An Exif project tag, for insertion into proprietary or standard Exif metadata associated with each photograph, can therefore be generated. Other metadata tags that can be adapted to include a project tag include, for example, Information Interchange Model (IIM), which defines a set of metadata attributes that can be applied to text, images and other media types, and Extensible Metadata Platform (XMP), which is a standard created by Adobe Systems Inc., for processing and storing standardized and proprietary information relating to the contents of a file.

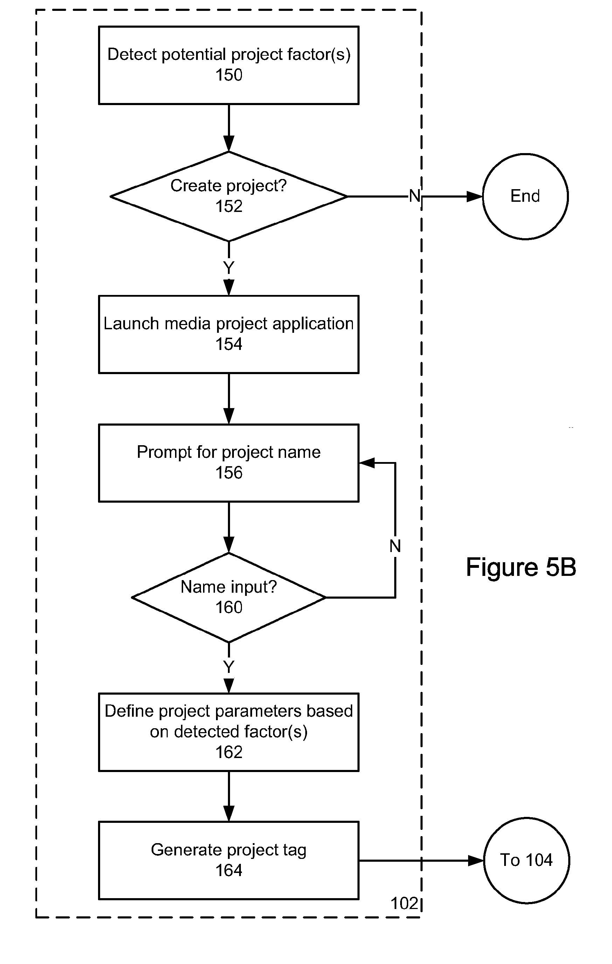

As shown in Figure 5B, the project parameters can also be determined by detecting at least one potential project factor (150), and receiving confirmation that the at least one potential factor is associated with the media project by prompting the user to confirm that a project should be created (152). A media project application, as discussed above, can then be launched (154), the user can be prompted for a project name (156), or a default project name can be provided, such as based on current date, location or time. Once a project name has been input (160) or accepted, the project parameters can be defined, or generated, in accordance with the at least one potential project factor (162). The project parameters can include, for example, any one or more of current date, location and time. Optionally, additional parameters can be specified, or the automatically defined parameters can be modified by the user. Once the project parameters have been defined, the media project application can generate a project tag, or label (164), as described above.

As used herein, a project factor is any factor that indicates or suggests that a media project may be desirable. For example, a project factor can be derived from another data source, such as a calendar application resident on the portable electronic device or on the user's home computer. The creation or activation of a meeting or trip entry can trigger the launch of the media project application, and project parameters and a project tag can be generated based on the parameters defining the meeting or trip (e.g. date, duration, etc.). Another example project factor is a location-based factor. For example, detection, such as through a GPS or other geo-location system, that the portable electronic device is in, or traveling to, a vacation-destination location, such as Las Vegas, could trigger the media project application to query whether a media project should be created. The media project application could be triggered directly in response to detecting the location through the GPS system, or the could be subsequently triggered when a media object, such as a picture, is taken. Project factors can also be derived from other devices. For example, if the portable electronic device were paired with a separate GPS device, the portable electronic device can receive location-based factors from the GPS device, such as current location and destination information (if programmed into the GPS device).

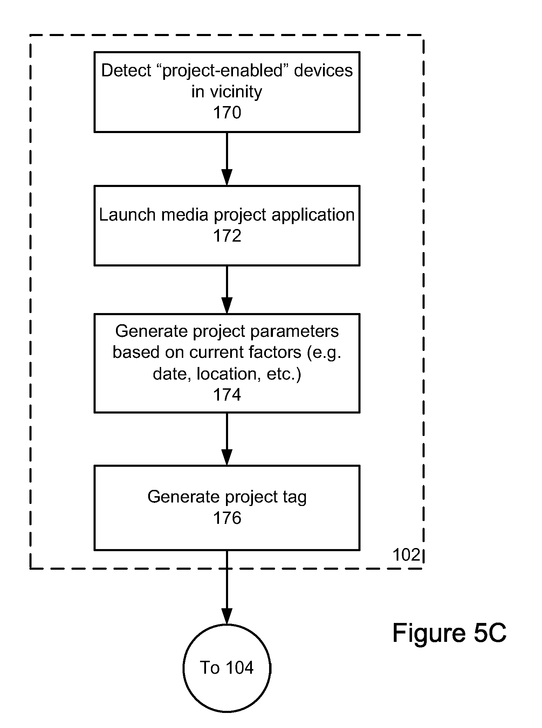

According to a further example implementation, as shown in Figure 5C, creating the media project can comprise detecting project-enabled devices in the vicinity of the device (170). The project-enabled devices can be, for example, other portable electronic devices in the vicinity of the device that have the media project application loaded. Such devices can be discovered by, for example, near or short-range wireless techniques, such as described above in relation to the short-range communications subsystem 44. If devices are detected in the vicinity, the media project application can be launched (172), and project parameters can then be generated based on at least one current factor common to the detected project-enabled electronic devices (174). A project tag identifying the media project can then be generated (176), as described above. The at least one current factor can be any parameter stored in, or detected by, the device. Examples include the current date and the current location of the device.

Referring again to Figure 4, the created media project permits media objects, from a plurality of portable electronic devices to be associated together in a single project, provided the media objects satisfy the project parameters defined for the project. In order to associate media objects from a plurality of devices, the media project is first shared with other portable electronic devices (104). The media project, comprising the project identifier, project parameters and project tag can be stored on the portable electronic device of the project creator, or on a server in the host system 100 or other systems 101, as determined according to desired implementation preferences, including security and storage considerations.

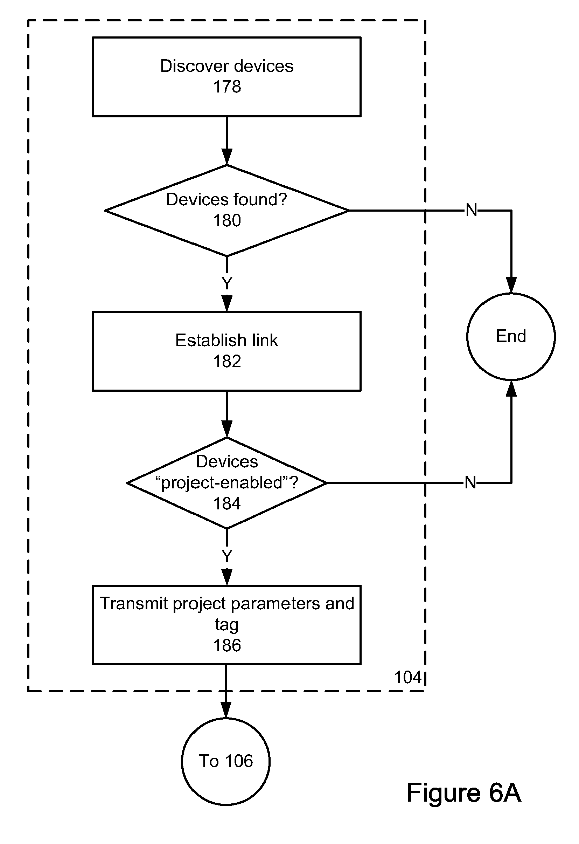

According to an example implementation, as shown in Figure 6A, sharing the media project can comprise discovering devices (178), such as through Bluetooth™ or Near Field Communications (NFC). If one or more devices are found (180), links can then be established (182). If the device(s) are determined to be project-enabled, as described above, the project parameters and the project tag can be transmitted to the device(s). This determination is also illustrated in Figure 2, where the screen 90 includes a button "Find other devices?" that can be selected to initiate the discovery process. The resultant screen 92 lists devices discovered in the vicinity (i.e. "Alice's camera" and "Bob's smartphone") with which the project creator can choose to pair.

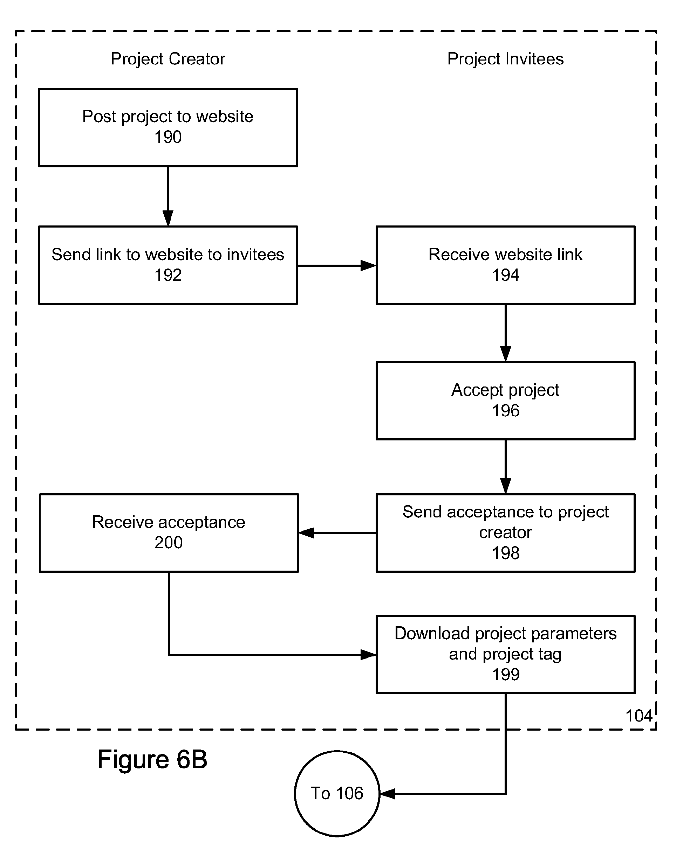

According to another example implementation, as shown in Figure 6B, sharing the media project can comprise posting the media project to a site (190), such as a website, for download by invited portable electronic devices or by users of such devices ("invitees"). In such an example, the project can be created directly on the project creator's portable electronic device, and uploaded to the website directly, such as through a wireless communication link, or uploaded to the website through the creator's home computer, such as by uploading the project through data port 42. Alternately, the media project application can be resident on, or accessible through, the creator's home computer, or other like device, and the creator can pre-create the project for distribution to invitees. It is also contemplated that the media project application can be accessed through well-known social media applications, such as Facebook™, BlackBerry Messenger™, MySpace™, etc., allowing a project creator to create a project and distribute or advertise the project to other social media users. The project creator can send the invitees a link to the site (192), or, in the example of creation through a social media application, send the project to "friends" or other associated users of the social media application. Once the link has been received (194), and the site accessed by an invitee (196), or otherwise distributed to invitees, the media project can be accepted (198, 200) and the appropriate project parameters and project tag can be downloaded by the invitee device (199), or otherwise provided to the device.

Referring again to Figure 4, once a project has been created and shared, media objects stored in, created on, or generated by, the portable electronic devices participating in the project are identified (106). If the identified media objects meet the project parameters, the media objects are associated to the project (108), such as by inserting the project tag, or other identifier, into the metadata associated with the media object.

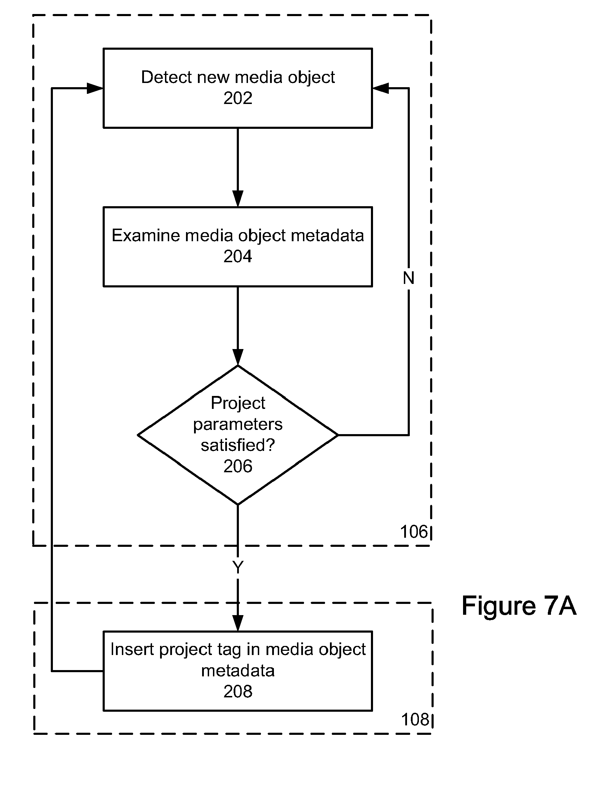

Referring to Figure 7A, identifying the media objects can comprise detecting a new media object (202) stored on, created by, or generated by any of the portable electronic devices associated with the media project, and accessing metadata associated with the new media object (204). If the new media object metadata satisfies the project parameters (206), the metadata associated with the object can be updated or modified to insert the project tag (208).

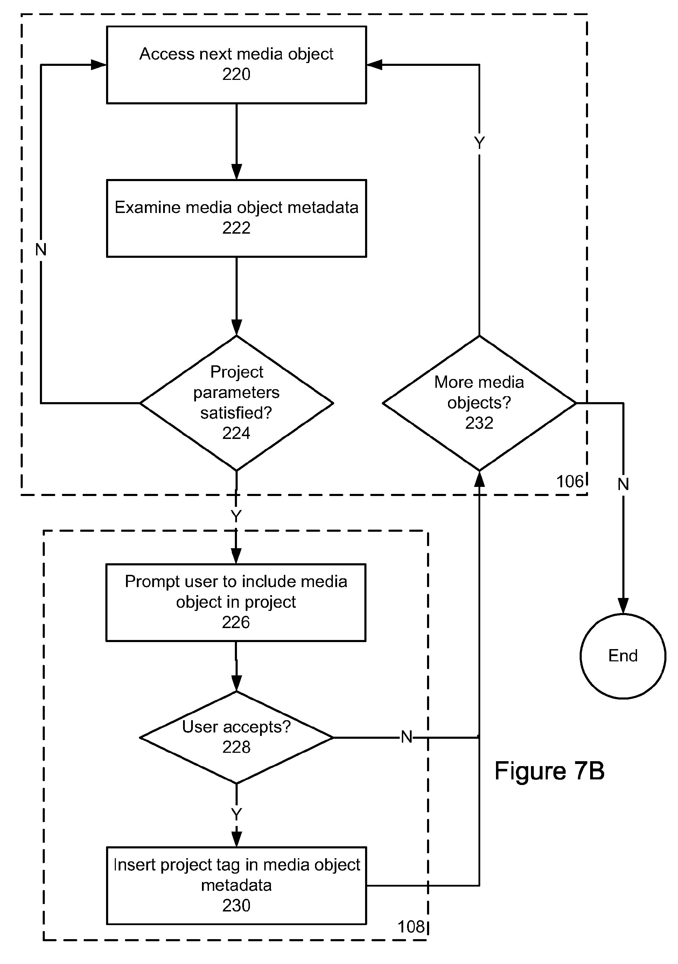

According to a further example implementation, as shown in Figure 7B, identifying media objects can comprise accessing media objects previously stored in a portable electronic device associated with the project (220). The metadata associated with the media object can again be examined (222), and, if the media object metadata meets the project parameters, a user of the device can be prompted for an indication that the media object is associated with the media project (226). If such an indication is received in response to the prompt (228), a project tag can be inserted into the metadata associated with the media object (230). The process can then be repeated for other media objects stored on the device (232). The implementations of Figures 7A and 7B are not mutually exclusive, and both implementations of identifying and tagging media objects can be performed to associate media objects to a project.

The method can then further include post-processing the media objects. Such post-processing can include downloading the media objects from the plurality of portable electronic devices to a central repository, such as well-known web-based photo repositories, such as Picasa^{®} and Flickr^{®}. The central repository can be located in a single server, such as a server resident on the host system 100 or other systems 101, or can be distributed among a plurality of servers and computers, such as in a cloud computing environment. The uploaded media objects can be analyzed to determine if the uploaded media objects are associated with a given media project, such as by examining the metadata to locate a project tag associated with each object. Media objects that are determined to belong to a project can then be grouped into a single collection, and, optionally, further organized within the collection according to other information, such as timestamps.

The disclosure describes a method and system to create and share a media project that automatically tags media objects meeting certain pre-defined parameters or criteria. Not only do the method and system permit media objects created on multiple devices to be easily collected and grouped together, but, through the analysis and modification of metadata associated with each media object, the media objects can be sorted and/or categorized more efficiently once grouped as a project.

In the preceding description, for purposes of explanation, numerous details are set forth in order to provide a thorough understanding of the implementations. However, it will be apparent to one skilled in the art that these specific details are not required. In other instances, well-known electrical structures and circuits are shown in block diagram form in order not to obscure the understanding. For example, specific details are not provided as to whether the implementations described herein are implemented as a software routine, hardware circuit, firmware, or a combination thereof.

Implementations of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an implementation of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described implementations are intended to be examples only. Alterations, modifications and variations can be effected to the particular implementations by those of skill in the art without departing from the scope, which is defined solely by the claims appended hereto.

## Claims

1. A processor-implemented method of managing media objects generated by a plurality of portable electronic devices, the method comprising:
creating (102) a media project having project parameters, the media project for associating media objects, from the plurality of portable electronic devices, that meet the project parameters;
sharing (104) the media project amongst the plurality of portable electronic devices;
identifying (106) a media object meeting the project parameters; and
associating (108) the media object with the media project.

2. The method of claim 1, further comprising uploading media objects from the plurality of portable electronic devices to a central repository.

3. The method of claim 2, further comprising:
analyzing the media objects uploaded from the plurality of portable electronic devices to determine media objects that have been associated to the media project;
storing the media objects associated with the media project; and
creating a single collection of the media objects associated with the media project.

4. The method of any preceding claim, wherein creating the media project comprises:
determining (126) the project parameters; and
generating (130) a project tag identifying the media project in accordance with the project parameters.

5. The method of any one of claims 1 to 3, wherein creating the media project comprises:
detecting (170) project-enabled devices, the project-enabled devices comprising the plurality of portable electronic devices;
generating (174) the project parameters based on at least one current factor common to the plurality of electronic devices, the at least one current factor being at least one of date and location; and,
generating (176) a project tag identifying the media project.

6. The method of claim 1, wherein sharing the media project comprises:
discovering (178) a device;
establishing (182) a link with the device; and
if the device is a project-enabled device, transmitting (186) the project parameters to the device.

7. The method of any preceding claim, wherein sharing the media project comprises:
posting (190) the media project to a site accessible to one of the others of the plurality of devices; and
receiving (200) acceptance of the media project from the one of the others of the plurality of devices.

8. The method of any preceding claim, wherein identifying the media objects comprises:
detecting (202) a new media object created on any of the plurality of portable electronic devices, the new media object having metadata associated therewith; and
if the metadata satisfies the project parameters, inserting (208) a project tag into the metadata.

9. The method of any one of claims 1 to 7, wherein identifying the media objects comprises:
accessing (220) a media object created on any of the plurality of portable electronic devices, the media object having metadata associated therewith; and
if the metadata satisfies the project parameters, prompting (226) for an indication that the media object is associated with the media project;
if the indication is received, inserting (230) a project tag into the metadata.

10. A portable electronic device (20), comprising:
a media device (48) generating media objects;
a memory (30) for storing the media objects generated by the media device, and storing a media project having project parameters, the media project for associating media objects, meeting the project parameters; and
a processor (22) configured to:
identify a media object meeting the project parameters; and
associate the media object with the media project.

11. The device of claim 10, wherein the processor (22) is further configured to:
create the media project having the media project parameters; and
share the media project amongst a plurality of portable electronic devices.

12. The device of claim 11, wherein the processor (22) is further configured to:
determine the project parameters; and
generate a project tag identifying the media project in accordance with the project parameters.

13. The device of claim 11 or claim 12, further comprising at least one of:
a Global Positioning System (GPS) subsystem (46), and;
a short-range communications subsystem (44) to detect project-enabled devices in the vicinity of the portable electronic device (20), the project-enabled devices and the portable electronic device (20) comprising the plurality of portable electronic devices; and
the processor (22) is further configured to:
generate the project parameters based on at least one current factor common to the plurality of electronic devices; and
generate a project tag identifying the media project;
wherein the at least one current factor is a current location of the portable electronic device.

14. The device of any one of claims 10 to 13, wherein identifying media objects comprises:
detecting a new media object, the new media object having metadata associated therewith; and
if the metadata satisfies the project parameters, prompting for an indication that the media object is associated with the media project;
if the indication is received, inserting a project tag into the metadata.

15. A tangible computer-readable medium storing instructions, which, when executed by a processor, cause the processor to implement the method of managing media objects of any one of claims 1 to 9.

## Amended claims

### Amended claims in accordance with Rule 137(2) EPC.

**1.** A processor-implemented method of managing media objects generated by a plurality of portable electronic devices, the method comprising:
creating (102) a media project having project parameters, the media project for associating media objects, from the plurality of portable electronic devices, that meet the project parameters;
electronically sharing (104) the media project amongst the plurality of portable electronic devices;
identifying (106) a media object having metadata associated therewith that satisfies the project parameters; and
associating (108) the media object to the media project by inserting a project tag, identifying the media project, into the metadata associated with the media object.

**2.** The method of claim 1, further comprising uploading media objects from the plurality of portable electronic devices to a central repository.

**3.** The method of claim 2, further comprising:
analyzing the media objects uploaded from the plurality of portable electronic devices to determine media objects having the project tag;
storing the media objects having the project tag; and
creating a single collection of the media objects having the project tag.

**4.** The method of any one of claims 1 to 3, wherein creating the media project comprises:
determining (126) the project parameters; and
generating (130) the project tag to associate the media objects to the media project, the project tag identifying the media project in accordance with the project parameters.

**5.** The method of any one of claims 1 to 3, wherein creating the media project comprises:
detecting (170) project-enabled devices having a media project application loaded thereon, the project-enabled devices comprising the plurality of portable electronic devices;
generating (174) the project parameters based on at least one current factor common to the plurality of electronic devices, the at least one current factor being at least one of date and location; and,
generating (176) the project tag identifying the media project.

**6.** The method of one of claims 1 to 5, wherein sharing the media project comprises:
discovering (178) a device;
establishing (182) a link with the device; and
if the device is a project-enabled device having a media project application loaded thereon, transmitting (186) the project parameters to the device.

**7.** The method of any one of claims 1 to 5, wherein sharing the media project comprises:
posting (190) the media project to a site accessible to one of the others of the plurality of devices; and
receiving (200) an electronic response of acceptance of the media project from the one of the others of the plurality of devices.

**8.** The method of any one of claims 1 to 7, wherein identifying the media objects comprises:
detecting (202) a new media object created on any of the plurality of portable electronic devices, the new media object having metadata associated therewith; and
if the metadata satisfies the project parameters, inserting (208) the project tag into the metadata.

**9.** The method of any one of claims 1 to 7, wherein identifying the media objects comprises:
accessing (220) a media object created on any of the plurality of portable electronic devices, the media object having metadata associated therewith; and
if the metadata satisfies the project parameters, prompting (226) for an indication that the media object is associated with the media project;
if the indication is received, inserting (230) the project tag into the metadata.

**10.** A portable electronic device (20), comprising:
a media device (48) generating media objects;
a memory (30) for storing the media objects generated by the media device, and storing a media project having project parameters, the media project for associating media objects, meeting the project parameters; and
a processor (22) configured to:
electronically share (104) the media project amongst a plurality of portable electronic devices;
identify (106) a media object having metadata associated therewith that satisfies the project parameters; and
associate (108) the media object to the media project by inserting a project tag, identifying the media project, into the metadata associated with the media object.

**11.** The device of claim 10, wherein the processor (22) is further configured to:
create (102) the media project having the project parameters.

**12.** The device of claim 11, wherein the processor (22) is further configured to:
determine the project parameters; and
generate the project tag to associate the media objects to the media project, the project tag identifying the media project in accordance with the project parameters.

**13.** The device of claim 11 or claim 12, further comprising at least one of:
a Global Positioning System (GPS) subsystem (46), and;
a short-range communications subsystem (44) to detect project-enabled devices having a media project application loaded thereon in the vicinity of the portable electronic device (20), the project-enabled devices and the portable electronic device (20) comprising the plurality of portable electronic devices; and
the processor (22) is further configured to:
generate the project parameters based on at least one current factor common to the plurality of electronic devices; and
generate the project tag identifying the media project;
wherein the at least one current factor is the current location of the portable electronic device.

**14.** The device of any one of claims 10 to 13, wherein identifying media objects comprises:
detecting a new media object, the new media object having metadata associated therewith; and
if the metadata satisfies the project parameters, prompting for an indication that the media object is associated with the media project;
if the indication is received, inserting the project tag into the metadata.

**15.** A tangible computer-readable medium storing instructions, which, when executed by a processor, cause the processor to implement the method of managing media objects of any one of claims 1 to 9.
